(19) Europäisches Patentamt
European Patent Office
Office européen des brevets

(11) Veröffentlichungsnummer: **0 012 832**
**B1**

(12) # EUROPÄISCHE PATENTSCHRIFT

(45) Veröffentlichungstag der Patentschrift: **26.05.82**

(51) Int. Cl.³: **C 04 B 23/04,** C 04 B 31/42, C 04 B 31/10

(21) Anmeldenummer: **79104494.4**

(22) Anmeldetag: **14.11.79**

(54) **Verfahren zum Hydrophobieren von Hochofenschlacke.**

(30) Priorität: **21.12.78 DE 2855277**

(43) Veröffentlichungstag der Anmeldung: **09.07.80 Patentblatt 80/14**

(45) Bekanntmachung des Hinweises auf die Patenterteilung: **26.05.82 Patentblatt 82/21**

(84) Benannte Vertragsstaaten: **AT BE FR GB NL**

(56) Entgegenhaltungen:
**BE-A-366 300**
**DE-A-2 235 170**
**DE-B-1 180 300**
**FR-A-1 007 930**
**FR-A-1 050 726**
**FR-A-2 129 168**
**US-A-1 854 348**
**US-A-1 984 023**

(73) Patentinhaber: **TEGO Industrie- und Bauchemie GmbH, Mülheimer Strasse 16/22, D-6800 Mannheim 81 (DE)**

(72) Erfinder: **Wagner, Helmut, Dr., Bachstrasse 2, D-6834 Ketsch (DE)**

(74) Vertreter: **Pulster, Antonius Tonnis, Mr. et al, P.O. Box 302, NL-2501 CH The Hague (NL)**

**EP 0 012 832 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Hydrophobieren von Hochofenschlacke

Die Erfindung betrifft ein Verfahren zum Hydrophobieren von Hochofenschlacke.

Hochofenschlacke enthält die nach der Reduktion der Eisenerze übriggebliebene Gangart, Koksasche, Zuschläge an Kalk und Dolomit, sowie den grössten Teil des Schwefels. Sie besteht im wesentlichen aus Kalk-Tonerde-Silikaten. Durchschnittlich weist Hochofenschlacke folgende Zusammensetzung auf (in Gew.-%): 38–45 CaO, 35–40 $SiO_2$, 5–12 MgO, 8–19 $Al_2O_3$, bis 3 $TiO_2$, bis 3 S. Sie wird in gebrochenem oder gemahlenem Zustand als Zuschlagstoff für Zement, als körniger Füllstoff beim Strassenbau, für Isolier- und Dämmzwecke sowie zur Herstellung von Formsteinen, Elementen für den Fertigbau und dergleichen verwendet. Die Hochofenschlacke hat jedoch den Nachteil, dass sie bei der Lagerung, insbesondere in gebrochenem Zustand, Wasser aufnimmt, welches in vielen Fällen die Weiterverarbeitung dieser Hochofenschlacke stört. Es besteht deshalb ein Bedürfnis, die Wasseraufnahmefähigkeit und Wasserretention der Hochofenschlacke zu verringern. Die Lösung dieser Aufgabe liegt vorliegender Erfindung zugrunde.

Das erfindungsgemässe Verfahren ist dadurch gekennzeichnet, dass man gebrochene Hochofenschlacke mit einer Dispersion filmbildender bituminöser Produkte vermischt, wobei die Dispersion ein solches Brechverhalten aufweist, dass sie erst nach vollständiger Benetzung der äusseren und inneren Oberfläche der Schlackenteilchen bricht und wobei man anschliessend oder vor ihrer Verwendung die mit filmbildenden bituminösen Produkten überzogene Schlacke 2 bis 20 Minuten auf eine Temperatur von 250 bis 350 °C erhitzt.

Es ist bereits aus der BE-A-366 300 bekannt, poröse Steinteilchen, wie Hochofenschlacke, mit einer Dispersion bituminöser Produkte zu vermischen, wobei das bituminöse Produkt koaguliert und eine gute Adhesion mit den porösen Teilchen bildet. Vorzugsweise werden dabei Koagulationsverzögerer angewandt.

Gegebenenfalls können die porösen Steinteilchen zuerst mit z.B. Bitumen umhüllt werden zur Verbesserung der Adhesion dieser Teilchen mit dem bituminösen Produkt der Dispersion.

Das vorliegende Problem der Verringerung der Wasseraufnahme der Hochofenschlacke und die erfindungsgemässe Lösung dieses Problems werden nicht erwähnt.

Das erfindungsgemässe Verfahren wird vorzugsweise mit einer frisch gewonnenen Hochofenschlacke durchgeführt, welche durch Besprühen mit Wasser abgekühlt ist, jedoch noch eine Temperatur von $> 100$°C aufweist. Man kann jedoch auch auf Halde liegende Hochofenschlacke verwenden, die aber vorzugsweise vor ihrer Verarbeitung auf eine Temperatur von $> 100$ °C erwärmt wird. Hierdurch soll zumindest die Hauptmenge des anhaftenden und eingeschlossenen Wassers entfernt werden. Die Schlacke soll dabei in ihrer gebrochenen Form vorliegen, um eine möglichst grosse Oberfläche zu schaffen, wobei es sich als zweckmässig herausgestellt hat, wenn die Korngrösse einer solchen Schlacke zwischen etwa 2 und 25 cm liegt. Die heisse oder gegebenenfalls auf eine Temperatur von $> 100$ °C erhitzte Schlacke wird nun mit einer Dispersion filmbildender bituminöser Produkte innig vermischt. Unter dem Begriff «bituminöse Produkte» sind dabei entsprechend DIN 53 946 solche Stoffe zu verstehen, die aus Bitumen, Teer und/oder Pech bestehen oder diese Produkte enthalten. Besonders bevorzugt erfolgt das erfindungsgemässe Verfahren mit Dispersionen von Bitumen, Teerbitumen oder Teerpechen einer Penetrationszahl von 60 bis 300, bestimmt nach DIN 1995, U 3.

Die bituminösen Produkte müssen dabei auf der Oberfläche der Schlacke einen geschlossenen Film bilden. Dies wird durch Verwendung einer zur Umhüllung der Schlacke ausreichenden Menge Bitumen erreicht und durch Dauer und Intensität des Mischvorganges unterstützt. Dieser geschlossene Film bildet sich dabei bei und nach dem Brechen der Dispersion; die Filmbildung wird dann durch die thermische Nachbehandlung noch verbessert.

Erfindungswesentlich ist nun insbesondere, dass die Dispersion ein bestimmtes Brechverhalten aufweist. Unter Brechverhalten versteht man dabei die Eigenschaft einer Dispersion, sich unter Koagulation der dispersen Phase zu entmischen. Dieses Brechverhalten soll erfindungsgemäss so eingestellt sein, dass die Entmischung der Dispersion unter Brechen erst dann erfolgt, wenn die äussere und innere Oberfläche der Schlackenteilchen vollständig benetzt ist. Unter äusserer Oberfläche ist dabei die sichtbare Oberfläche zu verstehen. Unter innerer Oberfläche soll die Oberfläche der Schlackenteilchen verstanden sein, die in Form von Poren und Rissen in Verbindung mit der äusseren Oberfläche steht.

Die Bestimmung des Brechverhaltens einer Dispersion bituminöser Produkte ist dem Fachmann geläufig. Sie kann nach DIN 1995 U 28 durchgeführt werden. Hierzu werden bestimmte Mengen Splitt bzw. Sand in einer halbkugeligen Schale mit vorgegebenen Mengen einer Bitumenemulsion eine halbe bzw. eine Minute innig vermischt, und es wird dabei beobachtet, wie sich die Konsistenz des Mischguts bzw. die Verteilung des Bindemittels ändert. In ähnlicher Weise wird die Stabilität der Dispersion nach der Schweizerischen Norm SNV 671 786 ermittelt.

Die Herstellung der beim erfindungsgemässen Verfahren eingesetzten Dispersionen bituminöser Produkte mit dem geforderten Brechverhalten ist dem Fachmann geläufig. Bei der Auswahl der Emulgatoren ist natürlich zu beachten, dass sie durch Bestandteile der Hochofenschlacke nicht zu unwirksamen Produkten umgewandelt und ausgefällt werden. In diesem Falle würde nicht die Forderung erfüllt, dass die Dispersion erst brechen

darf, wenn die vollständige Benetzung der inneren und äusseren Oberfläche der Schlacke erfolgt ist.

Nichtionogene Emulgatoren sind prinzipiell aufgrund ihrer relativen Unempfindlichkeit gegenüber pH-Wert-Änderungen der wässrigen Phase zur Herstellung solcher Dispersionen geeignet. Sie haben aber den Nachteil, dass sie nach dem Brechen der Dispersion und Trocknen der überzogenen Schlacke ihre Emulgiereigenschaften behalten. Bei erneuter Feuchtigkeitseinwirkung auf die erfindungsgemäss behandelte Schlacke neigen sie zum Reemulgieren der bituminösen Produkte, zumindest aber zu einer gewissen Wasserretention.

Eine bevorzugte Ausführungsform des erfindungsgemässen Verfahrens ist dadurch gekennzeichnet, dass man als Emulgatoren zur Herstellung der Dispersion bituminöser Produkte amphotensidische Verbindungen verwendet. Amphotensidische Verbindungen sind definitionsgemäss solche, die in saurem Medium in kationischer Form, in alkalischem Medium in anionischer Form vorliegen. Die maximale Stabilität der Dispersionen liegt in einem pH-Bereich, in dem sich die Amphotenside isoelektrisch verhalten. Beispiele geeigneter Amphotenside sind grenzflächenaktive, mit höheren Alkylresten, z. B. mit 10 bis 22 Kohlenstoffatomen, substituierte Aminosäuren.

Für den Einsatz beim erfindungsgemässen Verfahren sind als amphotensidische Verbindungen besonders Betaine geeignet. Beispiele derartiger Betaine, die bevorzugt verwendet werden, entsprechen der allgemeinen Formel

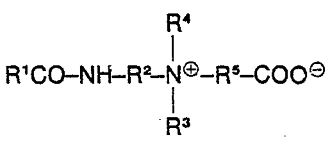

In dieser Formel bedeuten

$R^1$ einen Kohlenwasserstoffrest mit mindestens 6 Kohlenstoffatomen, insbesondere den Kohlenwasserstoffrest einer Fettsäure mit 10 bis 22 Kohlenstoffatomen,

$R^2$ einen Alkylenrest mit 2 bis 6 Kohlenstoffatomen,

$R^3$, $R^4$ gleiche oder verschiedene Alkylreste mit 1 bis 4 Kohlenstoffatomen,

$R^5$ einen Alkylenrest mit 1 bis 3 Kohlenstoffatomen.

Beispiele solcher Verbindungen sind Betaine der Formel

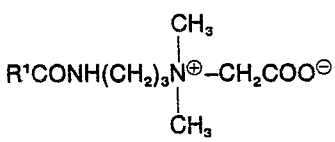

oder

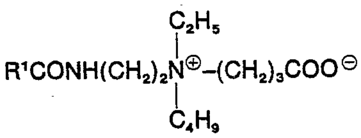

wobei $R^1$, wiederum beispielsweise, der Kohlenwasserstoffrest der Stearin- oder Tallölfettsäure oder einer Naphthensäure ist. Die Herstellung von Bitumenemulsionen unter Verwendung solcher Emulgatoren ist bekannt und z. B. in der DE-PS 1 180 300 beschrieben.

Weitere Beispiele geeigneter Emulgatoren entsprechen der Formel

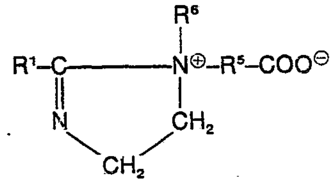

Hierin bedeutet

$R^6$ einen Hydroxyalkyl- oder Aminoalkylrest, wobei der Alkylrest durch eine oder mehrere NH-Gruppen unterbrochen sein kann,

$R^1$, $R^5$ haben die oben angegebene Bedeutung.

Beispiele solcher Verbindungen sind

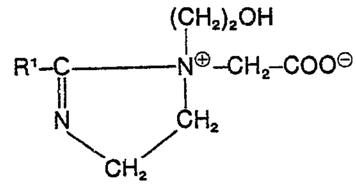

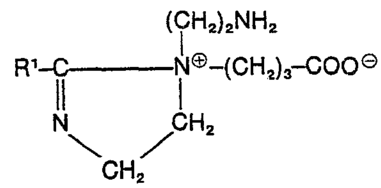

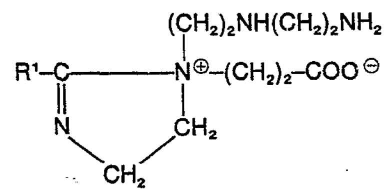

Hierbei ist $R^1$ wiederum der von Fettsäuren, Tallölfettsäuren oder Naphthensäuren abgeleitete Kohlenwasserstoffrest.

Das Brechverhalten der beim erfindungsgemässen Verfahren zu verwendenden Dispersionen kann insbesondere durch die geeignete Wahl der vorgenannten Emulgatoren und der von ihnen eingesetzten Mengen eingestellt und durch Vorversuche bestimmt werden. Die Brechzeit ist dabei auch von der Art der bituminösen Produkte abhängig, so dass aus der Reihe der vorstehend genannten Emulgatoren für den Einzelfall der geeignete Emulgator und die für die Einstellung des Brechverhaltens notwendige Emulgatormenge durch einfache Vorversuche, die jedem Fachmann geläufig und zumutbar sind, ausgewählt und festgestellt werden kann.

Eine bevorzugte Ausführungsform des erfindungsgemässen Verfahrens besteht darin, dass man das Verfahren mit einer Dispersion durchführt, welche zusätzlich noch oleophile Adhäsionsverbesserer enthält, welche auf die Oberfläche der Schlacke substantiv aufziehen. Diese oleophilen Adhäsionsverbesserer bewirken, dass

beim Brechen der Dispersion die Adhäsion der bituminösen Teilchen auf der Oberfläche der Schlacke verbessert wird. Die oleophilen Adhäsionsverbesserer können ausserdem die Benetzung der Schlackenoberfläche durch die Emulsion selbst verbessern. Beide Effekte führen zu einer gleichmässigeren Bedeckung der Schlackenoberfläche.

Geeignete oleophile Adhäsionsverbesserer sind insbesondere kationaktive Verbindungen. Es haben sich dabei vor allem Alkylamine und Alkylpolyamine, deren Alkylrest sich von den Fettsäuren herleitet, bewährt, wie z.B. Verbindungen der Formel $R^1NH_2$, $R^1NH(CH_2)_3NH_2$, sowie Aminoamide der Formel $R^1CONH(CH_2)_3NH(CH_2)_3NH_2$, wobei die Aminogruppen ganz oder teilweise mit aliphatischen oder cycloaliphatischen Carbonsäuren unter Salzbildung umgesetzt sein können. In gleicher Weise sind Verbindungen mit tertiären Aminogruppen wie z.B.

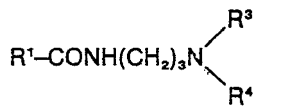 ,

Piperazinamide der Formel

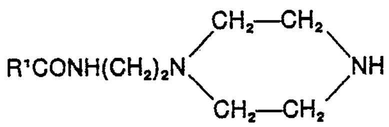

oder Verbindungen mit quaternären Ammoniumgruppen, wie z.B.

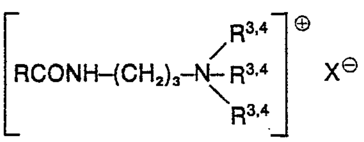 ,

wobei X ein beliebiges Anion, vorzugsweise ein Halogenion, ist, brauchbar.

Die Substantivität der Adhäsionsverbesserer kann durch Verwendung von Gemischen oder Umsetzungsprodukten von kationaktiven mit anionaktiven Adhäsionsverbesserern abgestuft und auch der Schlacke angepasst werden. Je basischer eine Schlacke ist, bzw. je mehr basische Anteile sie enthält, desto grösser sollte der Anteil an zugesetztem anionischem Adhäsionsverbesserer sein. Beispiele geeigneter anionischer Produkte sind die Salze der Fettsäuren und längerkettigen Sulfonsäuren. Dabei können im Gemisch die Salze der kationaktiven Adhäsionsverbesserer mit diesen Säuren oder deren partielle Neutralisationsprodukte vorliegen.

Die vorgenannten Adhäsionsverbesserer werden üblicherweise in Mengen von 0,05 bis 5,0 Gew.-%, bezogen auf disperse Phase, eingesetzt. Die als Adhäsionsverbesserungsmittel einzusetzenden Verbindungen können der wässrigen Phase, der bituminösen Phase oder der fertigen Dispersion zugesetzt werden.

Der Dispersion können vor, bei oder nach der Herstellung noch Lösungsmittel für die bituminösen Produkte zugesetzt werden. Diese wirken als Fluxmittel und verbessern die Filmbildungseigenschaften. Sie werden deshalb auch als Verlackungsmittel bezeichnet. Der Zusatz beträgt 0,5 bis 15%, bezogen auf disperse Phase.

Nach dem Brechen der Emulsion erfolgt sofort oder vor der bestimmungsgemässen Verwendung der behandelten Schlacke eine thermische Nachbehandlung. Dabei wird die Schlacke 2 bis 20 Minuten auf eine Temperatur von 250 bis 350 °C erhitzt. Die Oberflächenbedeckung wird hierbei gleichmässiger, höher schmelzende Anteile können zusammenfliessen. Je nach Art des bituminösen Rohstoffes kann eine Crackung eintreten, welche bewirkt, dass der bituminöse Film härtet und mechanisch widerstandsfähiger wird. Gleichzeitig können der Emulgator und der Adhäsionsverbesserer inaktiviert werden, wodurch die Wasserbeständigkeit noch verbessert und die Wasseraufnahme weiter verringert werden.

Die erfindungsgemäss mit bituminösen Produkten überzogenen Schlackenteilchen eignen sich insbesondere für den Strassenbau, z.B. zur Herstellung von Frostschutzschichten, da sie aufgrund ihrer Bedeckung mit bituminösen Produkten einen guten Verbund mit den Strassenbaumaterialien, wie Asphalt, ergeben. Man kann diese überzogenen Schlackenteilchen auch weiter als Dämmaterial für Hoch- und Tiefbauzwecke sowie zur Herstellung von Fertigelementen, Formsteinen und dergleichen verwenden. Die Schlackenteilchen behalten ihren hohen Dämmwert bei, da die Poren der Schlacke mit den Filmen aus bituminösen Produkten nur bedeckt und verschlossen, aber nicht ausgefüllt sind.

In den folgenden Beispielen wird die nicht beanspruchte Herstellung der bei dem erfindungsgemässen Verfahren verwendeten Dispersionen sowie die erfindungsgemässe Behandlung der Hochofenschlacke mit diesen Dispersionen beschrieben.

Allgemeine Herstellung der Dispersion

Die in den folgenden Beispielen genannten Bindemittel werden im aufgeschmolzenen Zustand intensiv gemischt, wobei der gegebenenfalls verwendete Adhäsionsverbesserer der Schmelze des Bindemittels zugefügt wird. Die Schmelze wird dann auf eine Temperatur von etwa 125 °C erwärmt.

Der zur Dispergierung des Bindemittelsystems benötigte Emulgator wird in warmem Wasser gelöst, gegebenenfalls durch Zusatz von KOH auf einen pH-Wert zwischen 7 und 9,5 eingestellt und die Lösung auf etwa 95 °C erwärmt.

Zur Emulgierung wird eine kontinuierlich arbeitende Kolloidmühle verwendet. Zur Erzielung feindisperser Emulsionen empfiehlt sich die Verwendung von Homogenisatoren.

Die erhaltene Dispersion wird möglichst rasch auf eine Temperatur abgekühlt, die unterhalb des Erweichungspunktes des Bindemittels liegt, um unerwünschte Teilchenvergröberungen zu vermeiden. Bei der Dispergierung sollte darauf geachtet werden, dass die dispergierten Teilchen vorzugsweise eine Teilchengrösse von $\leqq 10 \mu m$ aufweisen.

Bei der Herstellung der Dispersion können Lösungsmittel mitverwendet werden, welche das Eindringen der bituminösen Produkte in die Poren und Kapillaren der Schlackenoberfläche unterstützen und die Verfilmungstendenz verbessern. Ausserdem kann durch den Zusatz von Lösungsmittel zum Bindemittel ein Ausgleich von Dichteunterschieden zwischen Wasser und disperser Phase bewirkt werden. Der Zusatz dieser Lösungsmittel kann zu dem Bindemittel, der wässrigen Emulgatorlösung oder der fertigen Dispersion erfolgen.

Herstellung der Dispersionen

Dispersion I

Die Bindemittelphase besteht aus 39 kg Bitumen des Typs B 45 und 1 kg eines oleophilen Adhäsionsverbesserers der Formel

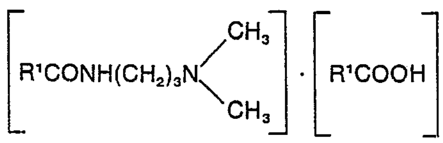, $R^1$ = Naphthenylrest

Das Bindemittel wird bei 130 °C homogenisiert.

Die Emulgatorlösung besteht aus 3,6 kg einer 30%igen Lösung von

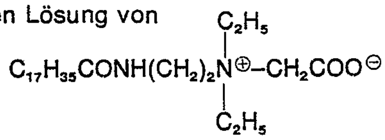

welche in 56,3 kg Wasser von 40 °C gelöst und mit 0,19 kg KOH auf einen pH-Wert von ca. 8 eingestellt worden ist.

Dispersion II

Die Bindemittelphase besteht aus 38,4 kg Weichpech 140, 1,6 kg Steinkohlenteeröl und 0,32 kg eines oleophilen Adhäsionsverbesserers der Formel

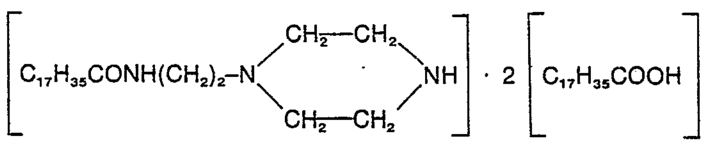

Die Bindemittelphase wird bei 120 °C homogenisiert.

Die wässrige Phase besteht aus 3,30 kg einer 30%igen Lösung von

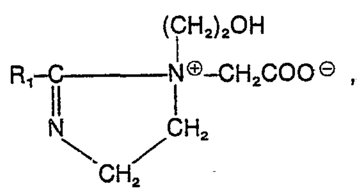

$R^1$ = Tallölfettsäurekohlenwasserstoffrest

welche in 56,20 kg Wasser von 40 °C gelöst und mit 0,18 kg KOH auf einen pH-Wert von 7,5 eingestellt worden ist.

In der folgenden Tabelle ist angegeben, nach welcher Verfahrensweise Schlacke erfindungsgemäss umhüllt wurde. Das Erhitzen der umhüllten Schlacke wird dabei vom Effekt her als Verlacken bezeichnet. Durch diese Tabelle wird belegt, dass erfindungsgemäss behandelte Schlacke ein erheblich reduziertes Wasseraufnahmevermögen hat, was ihre Verwendung erheblich vereinfacht und begünstigt.

| Dispersionstype | Gew.-% Umhüllungsmaterial = Bindemittel, bezogen auf Schlacke | Umhüllungsverfahren | Wasseraufnahme in Gew.-% nach 24stündiger Wasserlagerung nach Abtrocknen | nach 2stündiger Lufttrocknung |
|---|---|---|---|---|
| – (nicht erfindungsgemässer Vergleich) | – | Schlacke ca. $^8/_{12}$ mm ohne Vorbehandlung | 19,3 | 18,7 |
| I | 4,8 | Die auf ca. 100°C vorerhitzte Schlacke wurde im Freifallmischer nach Aufspritzen der Dispersion 10 Min. lang gemischt. Nach Aufgabe von 1,5 Gew.-% Schlackenmehl und 2minutiger Mischzeit unmittelbar folgend Verlackung des Bindemittelfilms bei ca. 350°C innerhalb von 5 Min. | 1,8 | 1,3 |
| II | 5,0 | Vorgangsweise analog I mit dem Unterschied, dass zwischen Schlackenmehlumhüllung und Verlackung des Bindemittels eine Lagerzeit von 24 Std. bei Raumtemperatur liegt. | 1,9 | 1,5 |

**Patentansprüche**

1. Verfahren zum Hydrophobieren von Hochofenschlacke, dadurch gekennzeichnet, dass man gebrochene Hochofenschlacke mit einer Dispersion filmbildender bituminöser Produkte eines solchen Brechverhaltens vermischt, dass die Dispersion erst nach vollständiger Benetzung der äusseren und inneren Oberfläche der Schlackenteilchen bricht und die mit filmbildenden bituminösen Produkten überzogene Schlacke anschliessend oder vor ihrer Verwendung 2 bis 20 Minuten auf eine Temperatur von 250 bis 350 °C erhitzt.

2. Verfahren nach Anspruch 1, dadurch gekennzeichnet, dass man frisch anfallende, mindestens 100 °C heisse, gebrochene Hochofenschlacke verwendet.

3. Verfahren nach Anspruch 1, dadurch gekennzeichnet, dass man auf Halde liegende Hochofenschlacke vor der Vermischung mit der Bitumendispersion auf mindestens 100 °C erhitzt.

4. Verfahren nach einem oder mehreren der vorhergehenden Ansprüche, dadurch gekennzeichnet, dass man eine Dispersion verwendet, die als Emulgatoren amphotensidische Verbindungen enthält.

5. Verfahren nach Anspruch 4, dadurch gekennzeichnet, dass man eine Dispersion verwendet, die als Emulgatoren Betaine der Formel

$$R^1CO{-}NH{-}R^2{-}\overset{\displaystyle R^4}{\underset{\displaystyle R^3}{\overset{|}{\underset{|}{N^{\oplus}}}}}{-}R^5{-}COO^{\ominus}$$

worin

$R^1$ einen Kohlenwasserstoffrest mit mindestens 6 Kohlenstoffatomen, insbesondere den Kohlenwasserstoffrest einer Fettsäure mit 10 bis 22 Kohlenstoffatomen,

$R^2$ einen Alkylenrest mit 2 bis 6 Kohlenstoffatomen,

$R^3$, $R^4$ gleiche oder verschiedene Alkylreste mit 1 bis 4 Kohlenstoffatomen,

$R^5$ einen Alkylenrest mit 1 bis 3 Kohlenstoffatomen

bedeuten, enthält.

6. Verfahren nach einem oder mehreren der vorhergehenden Ansprüche, dadurch gekennzeichnet, dass man eine Dispersion verwendet, die oleophile Adhäsionsverbesserer in Mengen von 0,05 bis 5 Gew.-%, bezogen auf disperse Phase, enthält.

7. Verfahren nach einem oder mehreren der vorhergehenden Ansprüche, dadurch gekennzeichnet, dass man oleophile Adhäsionsverbesserer verwendet, welche substantiv auf die Schlacke aufziehen.

8. Verfahren nach einem oder mehreren der vorhergehenden Ansprüche, dadurch gekennzeichnet, dass man eine Dispersion verwendet, welche Lösungsmittel für die bituminösen Produkte in Mengen von 0,5 bis 15 Gew.-%, bezogen auf disperse Phase, enthält.

**Claims**

1. Process for rendering blast furnace slag hydrophobic, characterized in that crushed blast furnace slag is intermixed with a dispersion of film-forming bituminous products having a breaking behaviour such that the dispersion does not break until the outer and inner surfaces of the slag particles are totally wetted and the slag, coated with film-forming bituminous products, is heated subsequently or prior to use for 2 to 20 minutes to a temperature of 250 to 350 °C.

2. Process as claimed in claim 1, characterized in that freshly produced crushed blast furnace slag at a temperature of at least 100 °C is used.

3. Process as claimed in claim 1, characterized in that blast furnace slag from a tip is heated to at least 100 °C before being intermixed with the bitumen dispersion.

4. Process as claimed in one or more of the preceding claims, characterized in that a dispersion is used containing, as emulsifiers, amphoteric detergent compounds.

5. Process as claimed in claim 4, characterized in that a dispersion is used containing, as emulsifiers, betaines of the formula:

$$R^1CO{-}NH{-}R^2{-}\overset{\displaystyle R^4}{\underset{\displaystyle R^3}{\overset{|}{\underset{|}{N^{\oplus}}}}}{-}R^5{-}COO^{\ominus}$$

in which:

$R^1$ denotes a hydrocarbon residue with at least 6 carbon atoms, in particular the hydrocarbon residue of a fatty acid with 10 to 22 carbon atoms;

$R^2$ denotes an alkylene residue with 2 to 6 carbon atoms;

$R^3$, $R^4$ denote identical or different alkyl residues with 1 to 4 carbon atoms;

$R^5$ denotes an alkylene residue with 1 to 3 carbon atoms.

6. Process as claimed in one or more of the preceding claims, characterized in that a dispersion is used containing oleophilic adhesion improvers in quantities of 0,05 to 5%wt., related to the disperse phase.

7. Process as claimed in one or more of the preceding claims, characterized in that oleophilic adhesion improvers are used which absorb substantively into the slag.

8. Process as claimed in one or more of the preceding claims, characterized in that a dispersion is used containing solvents for the bituminous products in quantities of 0,15 to 15%wt., related to the disperse phase.

**Revendications**

1. Procédé pour hydrofuger des scories de haut fourneau, caractérisé en ce que l'on mélange des scories de haut fourneau fragmentées avec une dispersion de produits bitumineux filmogènes présentant un comportement à la rupture tel que la dispersion ne se brise qu'après mouillage complet des surfaces extérieure et intérieure des

particules de scories et on chauffe ensuite, ou avant leur utilisation, les scories revêtues de produits bitumineux filmogènes pendant 2 à 20 minutes à une température de 250 à 350 °C.

2. Procédé selon la revendication 1, caractérisé en ce que l'on utilise des scories de haut fourneau fragmentées, fraîchement obtenues, à une température d'au moins 100 °C.

3. Procédé selon la revendication 1, caractérisé en ce que l'on chauffe les scories de haut fourneau sur terril, avant mélange avec la dispersion de bitume, à une température d'au moins 100 °C.

4. Procédé selon une ou plusieurs des revendications qui précèdent, caractérisé en ce que l'on utilise une dispersion contenant en tant qu'agents émulsionnants des composés tensioactifs amphotères.

5. Procédé selon la revendication 4, caractérisé en ce que l'on utilise une dispersion contenant en tant qu'agents émulsionnants des bétaïnes de formule:

$$R^1CO-NH-R^2-\overset{\displaystyle R^4}{\underset{\displaystyle R^3}{N^{\oplus}}}-R^5-COO^{\ominus}$$

dans laquelle:

$R^1$ représente un reste hydrocarboné à au moins 6 atomes de carbone, en particulier le reste hydrocarboné d'un acide gras en C10–C22;

$R^2$ représente un groupe alkylène en C2–C6;

$R^3$ et $R^4$ représentent des groupes alkyles identiques ou différents en C1–C4;

$R^5$ représente un groupe alkylène en C1–C3.

6. Procédé selon une ou plusieurs des revendications qui précèdent, caractérisé en ce que l'on utilise une dispersion contenant des agents oléophiles d'amélioration de l'adhérence en quantité de 0,05 à 5% en poids par rapport à la phase dispersée.

7. Procédé selon une ou plusieurs des revendications qui précèdent, caractérisé en ce que l'on utilise des agents oléophiles d'amélioration de l'adhérence montant par substantivité sur les scories.

8. Procédé selon une ou plusieurs des revendications qui précèdent, caractérisé en ce que l'on utilise une dispersion contenant des solvants pour les produits bitumineux en quantité de 0,5 à 15% du poids de la phase dispersée.